# EUROPÄISCHE PATENTSCHRIFT

(11) **EP 0 983 900 B1**
(45) Veröffentlichungstag und Bekanntmachung des Hinweises auf die Patenterteilung: **24.03.2004**
(21) Anmeldenummer: 99111670.8
(22) Anmeldetag: 16.06.1999
(51) Int. Cl.: B60R 1/06

(54) **Aussenspiegel für Kraftfahrzeuge**
Exterior vehicle mirror
Rétroviseur extérieur pour véhicule

(30) Priorität: 02.09.1998 DE 19840004
(43) Veröffentlichungstag der Anmeldung: 08.03.2000
(73) Patentinhaber: MEKRA Lang GmbH & Co. KG, 90765 Fürth (DE)
(72) Erfinder: Lang, Heinrich, 91465 Ergersheim (DE); Stenzel, Alexander, 91438 Bad Windsheim (DE)
(74) Vertreter: Winter, Brandl & Partner

(56) Entgegenhaltungen:
- US-A- 5 721 646

## Beschreibung

Die Erfindung betrifft einen Außenspiegel für Fahrzeuge, insbesondere für Nutzfahrzeuge, nach dem Oberbegriff des Anspruch 1 wie z.B. aus US-A-5 721 646 bekannt ist.

Ein großes Problem bei Außenspiegeln, insbesondere bei einem Nutzfahrzeug, sind die auftretenden Vibrationen, die zum einen den Gebrauch des Spiegels beeinträchtigen und zum anderen zu Ermüdungsbrüchen usw. führen können.

Ein Lösungsansatz für diese Problematik ist bereits aus der DE-A-4010083 bekannt. Bei der dort gezeigten Spiegelkonstruktion besitzt das Gehäuse keine tragende Funktion mehr. Diese wird von einer Trägerplatte wahrgenommen, die mittels einer Haltevorrichtung an dem zur Befestigung des Spiegels am Nutzfahrzeug dienenden Halter befestigt ist. An dieser Trägerplatte sind das Gehäuse sowie die mindestens eine Spiegelscheibe des Außenspiegels und eine Verstelleinheit zu deren Positionseinstellung angebracht. Nachteilig hierbei ist es, daß die Trägerplatte und die Haltevorrichtung getrennte Bauteile sind, wodurch die Gefahr besteht, daß die stabile Befestigung der Trägerplatte am Halter beeinträchtigt wird. Dies ist insbesondere der Fall, wenn - wie im Ausführungsbeispiel der DE-A-4010083 gezeigt - das Gehäuse klemmend zwischen der Haltevorrichtung und der Trägerplatte gehalten ist, da sich in diesem Fall Gehäusevibrationen besonders leicht auf die Trägerplatte übertragen können.

Aus der US-A-4,701,037 ist ferner ein Kraftfahrzeug-Außenspiegel bekannt, bei dem ein zur Karosserie führender Haltearm und eine daran über ein einstückig angeformtes Klemmlager befestigte Trägerplatte vorgesehen sind. An dieser wird eine Spiegel-Verstelleinheit und daran wiederum eine Spiegelträgerplatte mit einer Spiegelscheibe montiert.

Schließlich ist aus der gattungsbildenen EP-A-0 590 510 ein Außenspiegel für Nutzfahrzeuge bekannt, der einen Halter zur Befestigung des Spiegels am Fahrzeug, eine in einem Gehäuse angeordnete Trägerplatte, an der das Gehäuse gehalten ist und die mittels einer Haltevorrichtung am Halter befestigt ist, mindestens eine verschwenkbare und an der Trägerplatte angebrachte, im Gehäuse angeordnete Spiegelanordnung mit Spiegelscheibe und mindestens eine Verstelleinheit aufweist, die an der Trägerplatte angebracht ist und die mit der mindestens einen Spiegelanordung zu deren Verschwenkung verbunden ist. Es hat sich herausgestellt, daß auch bei dieser Spiegelkonstruktion die im Einsatz auftretenden Vibrationen noch sehr groß sind. Dies trifft insbesondere für den Einsatz als Außenspiegel von Lastkraftwagen zu.

Es ist daher Aufgabe der vorliegenden Erfindung einen Außenspiegel für Fahrzeuge, insbesondere für Nutzfahrzeuge, anzugeben, der weniger vibrationsanfällig ist.

Die Lösung dieser Aufgabe erfolgt durch die Merkmale des Anspruchs 1.

Weitere vorteilhafte Ausgestaltungen der Erfindung ergeben sich aus den übrigen, in dem Unteransprüchen gennanten Merkmale.

Gemäß einer vorteilhaften Ausgestaltung der Erfindung können die insbesondere 6-eckigen Waben in unterschiedlichen Bereichen der Trägerplatte unterschiedlichen Durchmesser aufweisen. Damit kann den unterschiedlichen Belastungen in unterschiedlichen Bereichen der Trägerplatte Rechnung getragen werden. In gleicher Weise ist es auch möglich die Höhe der Wabenwände zu variieren. Durch die Variation der Höhe der Wabenwände kann auch das Klemmgegenlager der als Klemmlager ausgebildeten Haltevorrichtung einstückig mit der Trägerplatte ausgebildet werden.

Gemäß einer weiteren vorteilhaften Ausgestaltung der Erfindung ist eine Aufnahme für die Verstelleinheit einstückig mit der Trägerplatte ausgebildet. Durch diese Aufnahme wird die Verstelleinheit form- und kraftschlüssig gehalten, was ebenfalls erheblich zu einer Verbesserung des Vibrationsverhalten führt bzw. eine starke Dämpfung von Vibrationen bewirkt.

Gemäß einer weiteren vorteilhaften Ausgestaltung bildet die Aufnahme ein Teil des Gehäuses der Verstelleinheit. Besonders vorteilhaft ist hierbei bei einer Trägerplatte aus Kunststoff, daß die Verstelleinheit bzw. deren Elektronik ohne eigenes Gehäuse in die Aufnahme eingebaut werden kann, da die Isolierung durch die Trägerplatte bzw. die Aufnahme aus Kunststoff übernommen wird.

Gemäß einer weiteren vorteilhaften Ausgestaltung der Erfindung sind die Waben auf der Vorderseite gegenüber den Waben auf der Rückseite der Basisplatte gegeneinander versetzt. Auch hierdurch wird zum einen die Stabilität erhöht und zum anderen wird das Dämpfungsverhalten verbessert.

Weitere Einzelheiten, Merkmale und Vorteile der Erfindung ergeben sich aus dem nachfolgenden Beschreibung von beispielhaften Ausführungsformen der Erfindung anhand der Zeichnung.

Die Figuren 1 bis 6 zeigen Aussenspiegel die nicht zum Erfindung gehört.

Es zeigt:
- Fig. 1: einen Längsschnitt durch eine erste Ausführungsform der Erfindung;
- Fig. 2: eine perspektivische Darstellung einer beispielhaften Ausführungsform einer Trägerplatte mit Wabenstruktur;
- Fig. 3: eine Aufsicht auf die Rückseite der Trägerplatte nach Figur 2;
- Fig. 4: eine Aufsicht auf die Vorderseite der Trägerplatte nach Figur 2;
- Fig. 5a: eine Seitenansicht der Trägerplatte nach Figur 2;
- Fig. 5b: eine weitere Seitenansicht der Trägerplatte nach Figur 2;
- Fig. 6: eine Schnittdarstellung entlang der Linie A-A in Figur 4;
- Fig. 7: eine Aufsicht auf der Erfindung;
- Fig. 8: eine Schnittdarstellung entlang der Linie B-B in Figur 7;
- Fig. 9: eine Schnittdarstellung entlang der Linie A-AN Figur 7;
- Fig. 10: eine Figur 9 entsprechende Darstellung einer zweiten Version der Erfindung; und
- Fig. 11: eine Figur 9 entsprechende Darstellung einer dritten Version der Erfindung.

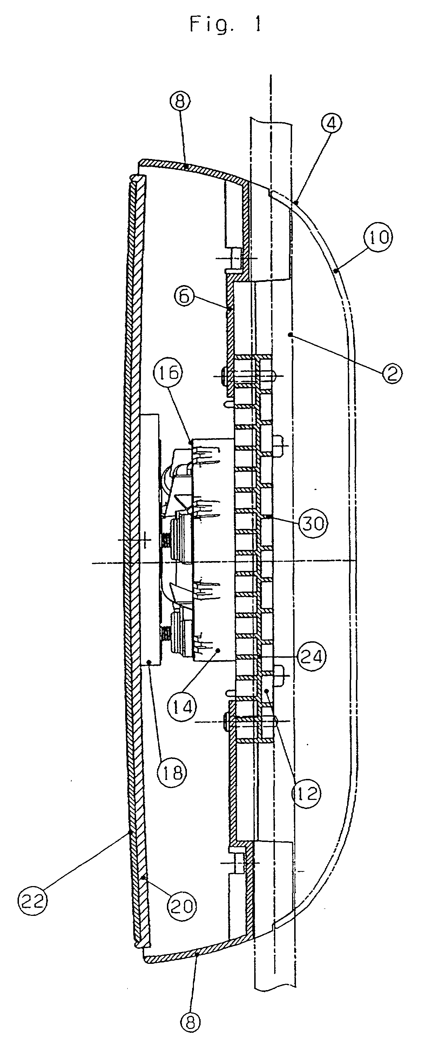

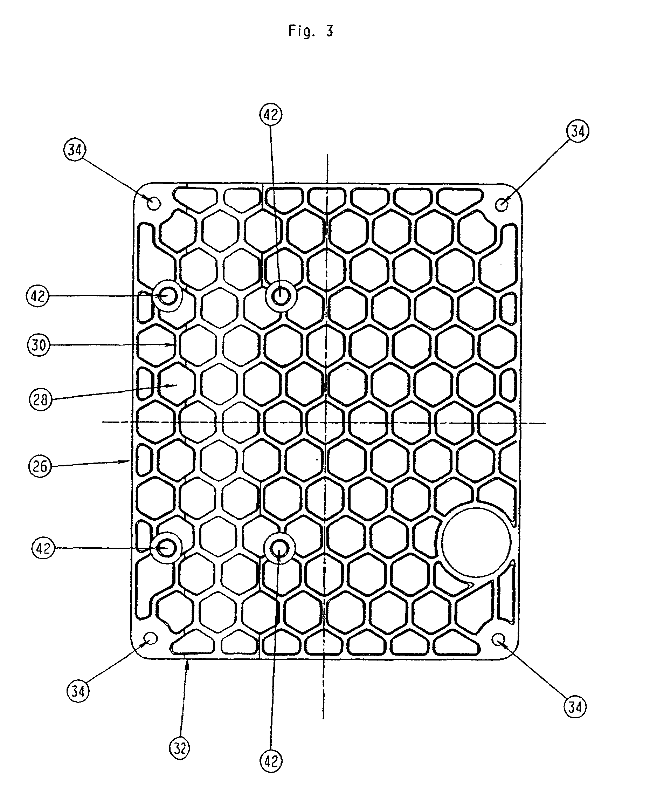

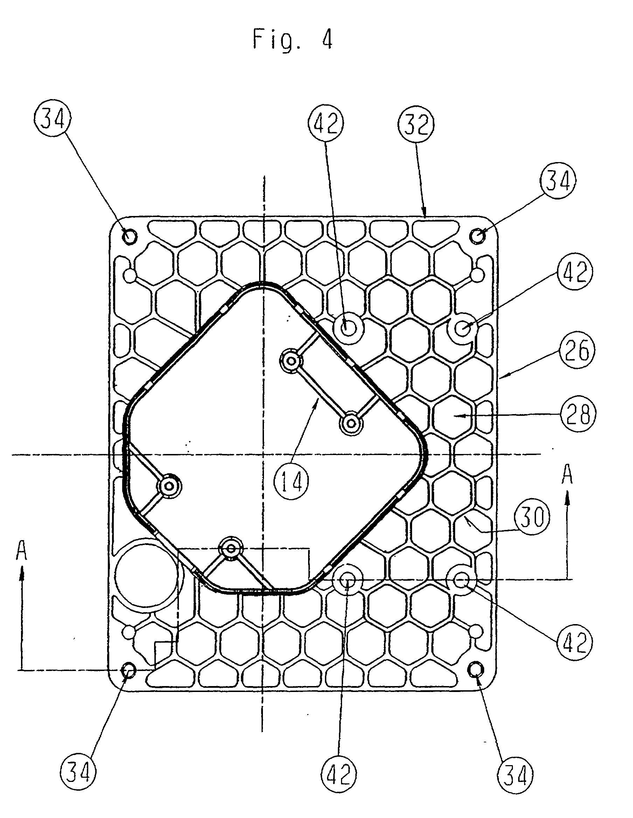

Nachfolgend wird ein Aussenspiegel der nicht zur Erfindung gehört anhand der Figuren 1 bis 6 beschrieben. Fig. 1 zeigt einen Längsschnitt durch eine beispielhafte erste Ausführungsform des erfindungsgemäßen Außenspiegels für Fahrzeuge. Der Außenspiegel umfaßt einen Halter 2 - strichliert dargestellt - zur Befestigung des Spiegels am Fahrzeug, ein Gehäuse 4 mit einer Gehäusebasis 6, die in einem Gehäuserahmen 8 übergeht, und eine Abdeckung 10. Das Gehäuse 4 bzw. genauer die Gehäusebasis 6 ist an einer Trägerplatte 12 montiert auf dessen Vorderseite in einer Aufnahme 14 die Verstelleinheit 16 angeordnet ist. Auf der Verstelleinheit 16 ist eine Spiegeltragplatte 18 montiert, auf die eine Halteplatte 20 für eine Spiegelscheibe 22 aufgeschoben und mit Hilfe einer Klemmschlußverbindung fixiert ist.

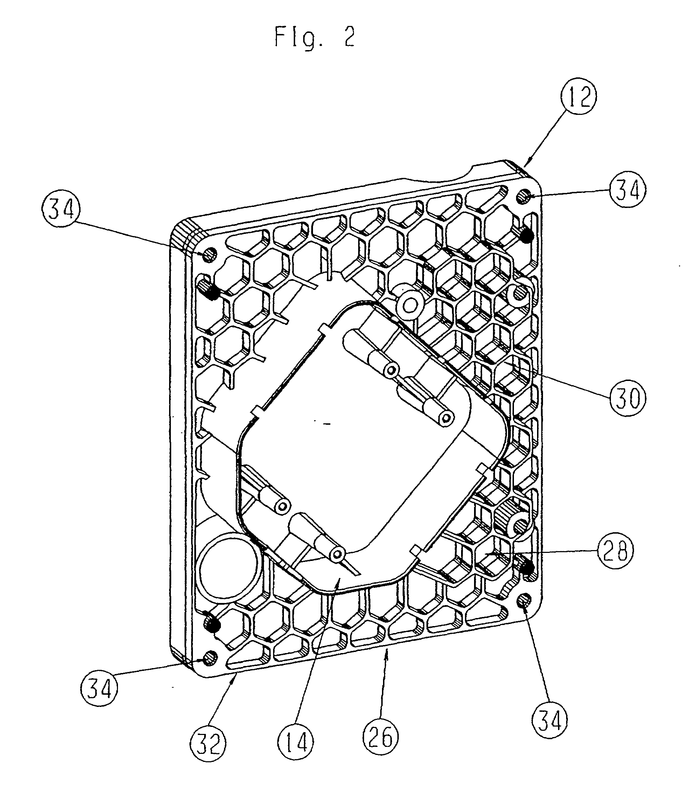

Fig. 2 zeigt eine perspektivische Darstellung der Trägerplatte 12. Die Trägerplatte 12 umfaßt eine ebene Basisplatte 24 auf der beidseitig eine Wabenstruktur 26 einstückig mit der Basisplatte 24 ausgebildet ist. Die Wabenstruktur 26 umfaßt dicht aneinander angeordnete sechseckige Waben 28 mit jeweils sechs Wabenwänden 30, wobei sich jeweils zwei benachbarte Waben 28 die dazwischenliegende Wabenwand 30 teilen. Die rechteckige Basisplatte 24 wird durch eine sich in Normalenrichtung zu der Basisplatte 24 erstreckende Randwand 32 abgeschlossen.

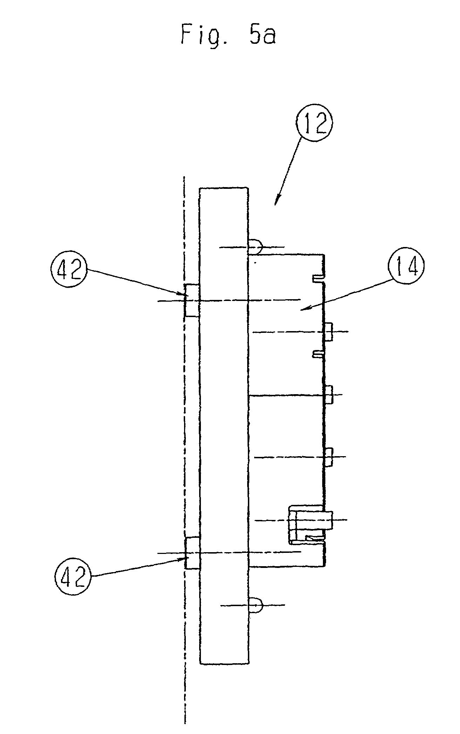

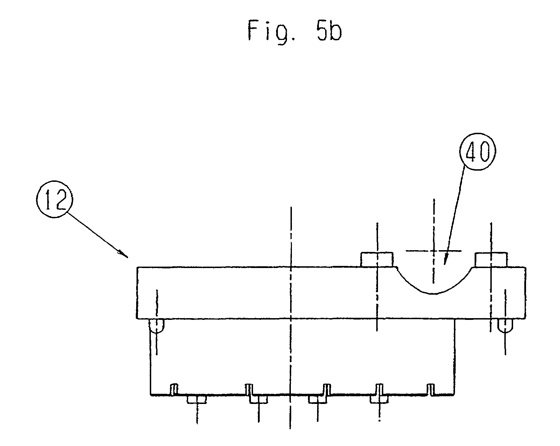

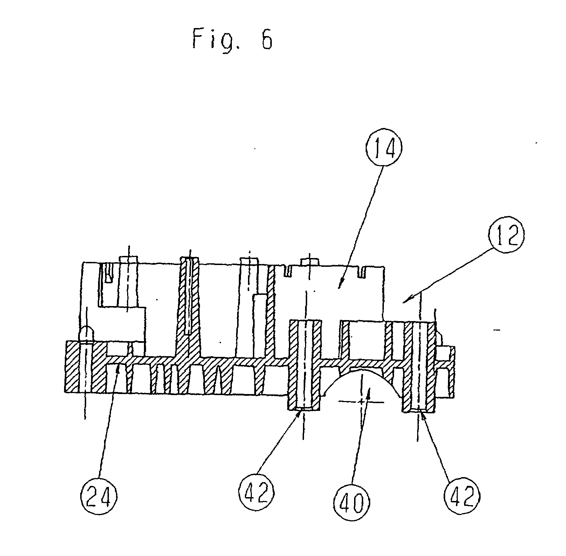

Wie aus den Figuren 2, 3 und 4 zu ersehen ist, sind in der Trägerplatte 18 auch Anschlußelemente 34 zur Montage der Gehäusebasis 6, ein Durchbruch 36 für den elektrischen Anschluß der Verstelleinheit 16 sowie die Aufnahme 14 für die Verstelleinheit 16 vorgesehen. Die Anschlußelemente 34 und die Aufnahme 38 für die Verstelleinheit 16 sind einstückig in der Trägerplatte 18 ausgebildet. In Figur 5b und Figur 6 ist auch ein einstückig in die Trägerplatte 18 integriertes Klemmenlager 40 dargestellt, in das der Halter 2 eingreift. In den Figuren 2 bis 6 sind auch Anschlußelemente bzw. Bohrungen 42 dargestellt, die von nicht näher dargestellten Schrauben durchsetzt werden, um ein nicht näher dargestelltes Klemmglied mit dem Klemmgegenlager 40 zu verbinden.

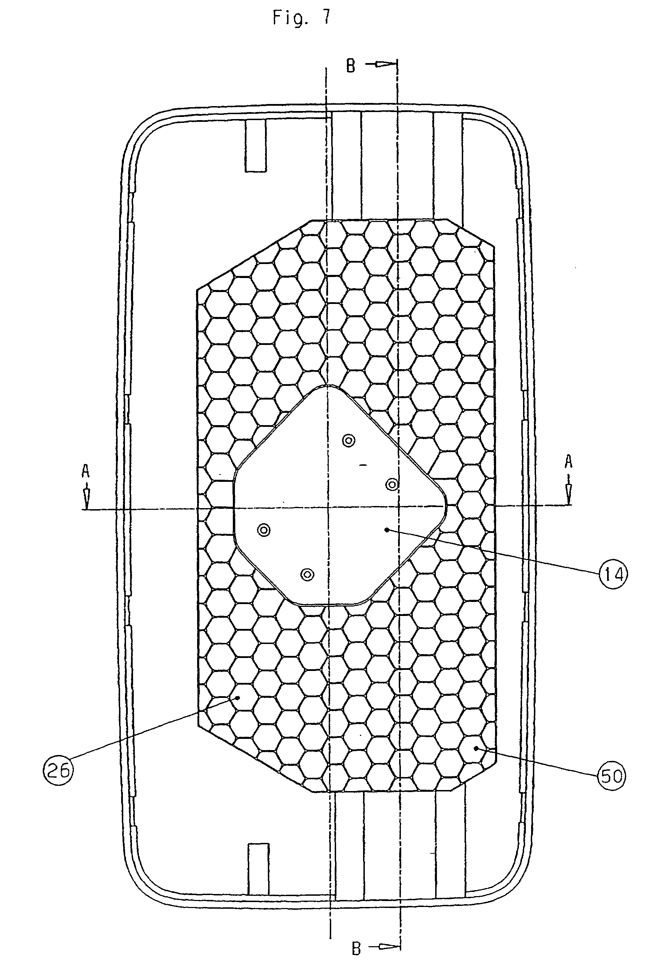

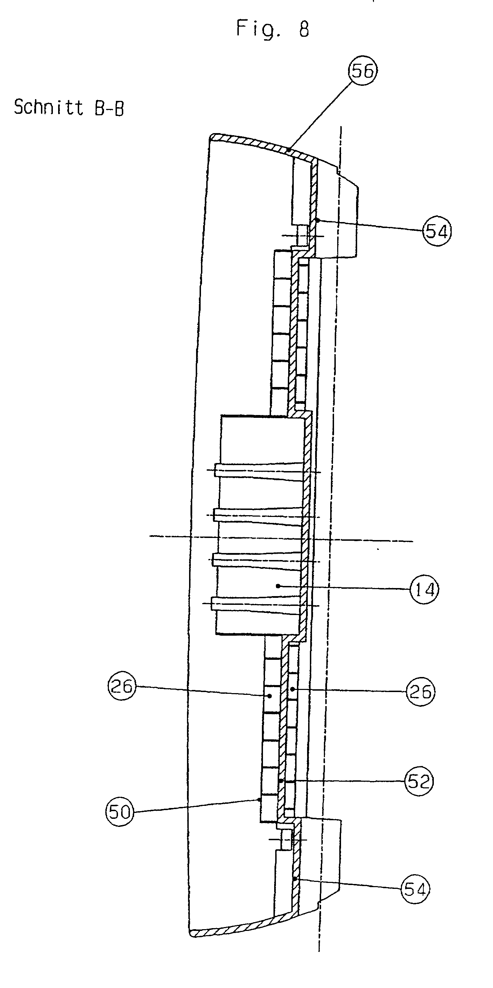

Anhand der Figuren 7 bis 11 wird jetzt die Erfindung mit einer Trägerplatte 50 beschrieben, die ebenfalls eine Basisplatte 52 mit einer Wabenstruktur 26 auf der Vorder- und Rückseite aufweist. Im Unterschied zu der ersten Ausführungsform gemäß den Figuren 1 bis 6 ist jedoch die Basisplatte 52 der Trägerplatte 50 einstückig mit einer Gehäusebasis 54 mit Gehäuserand 56 ausgebildet. Durch die einstückige Ausbildung von Gehäuserahmen 56, Gehäusebasis 54 und Basisplatte 52 der Trägerplatte 50 verringert sich die Zahl der Einzelteile, so daß die Montage vereinfacht wird. Darüber hinaus ist durch diese Integration eine höhere Stabilität gegeben was das Dämpfungs- bzw. Vibrationsverhalten positiv beeinflußt.

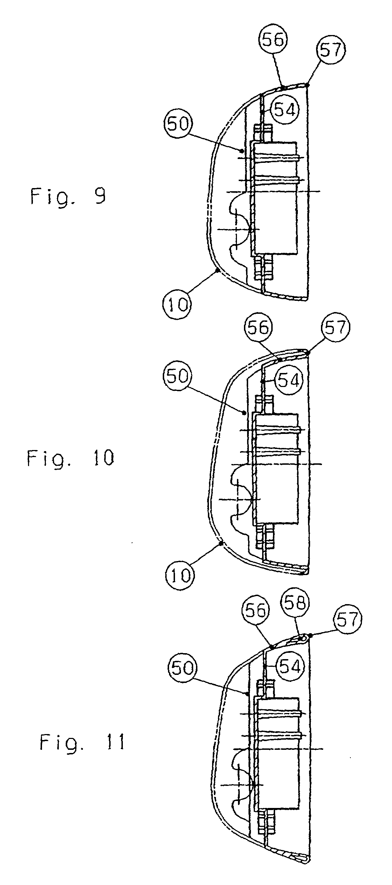

In den Schnittdarstellungen der Figuren 9, 10 und 11 sind 3 verschiedene Versionen der Erfindung gezeigt, die sich lediglich in der Ausgestaltung der Vorderkante 57 des Gehäuserahmens 56 unterscheiden. In Figur 9 erstreckt sich der Gehäuserahmen 56 lediglich im wesentlichen L-förmig von der Gehäusebasis 54 weg. Bei der Ausführungsform gemäß Figur 10 ist der Gehäuserahmen 56 an der Vorderkante 57 U-förmig nach hinten umgebogen und bietet somit eine Aufnahme für die Abdeckung 10. In der Ausführungsform gemäß Figur 11 ist der Gehäuserahmen 56 an der Vorderkante 57 durch einen Hohlraum 58 aufgebläht.

### Bezugszeichenliste

- 2: Halter
- 4: Gehäuse
- 6: Gehäusebasis
- 8: Gehäuserahmen
- 10: Gehäuseabdeckung
- 12: Trägerplatte
- 14: Aufnahme für Verstelleinheit
- 16: Verstelleinheit
- 18: Tragplatte
- 20: Spiegelhalteplatte
- 22: Spiegelscheibe
- 24: Basisplatte
- 26: Wabenstruktur
- 28: Waben
- 30: Wabenwand
- 32: Randwand
- 34: Anschlußelemente
- 36: Durchbruch
- 40: Klemmgegenlager
- 42: Bohrungen für Klemmvorrichtung

- 50: Trägerplatte
- 52: Basisplatte
- 54: Gehäusebasis
- 56: Gehäuserahmen
- 58: Hohlraum in 56

## Patentansprüche

1. Außenspiegel für Kraftfahrzeuge mit
einem Halter zur Befestigung des Spiegels am Fahrzeug,
einer in einem Gehäuse angeordneten Trägerplatte (50), an der das Gehäuse gehalten ist und die mittels einer Haltevorrichtung am Halter befestigt ist,
mindestens einer verschwenkbar an der Trägerplatte (50) angebrachten, am Gehäuse (4) angeordneten Spiegelanordnung mit Spiegelscheibe,
mindestens einer Verstelleinheit, die an der Trägerplatte (50) angebracht ist und die mit der mindestens einen Spiegelanordnung zu deren Verschwenkung verbunden ist, wobei
die Trägerplatte (50) eine Basisplatte (52) mit einer Vorder- und einer Rückseite aufweist, und auf der Vorder- und/oder Rückseite der Basisplatte (52) eine Wabenstruktur (26) mit einer Vielzahl von Waben einstückig mit der Basisplatte (52) ausgebildet ist, deren Wabenwände sich in Normalenrichtung zu der Basisplatte (52) erstrecken; und
die Trägerplatte (50) mit einer Gehäusebasis (54) verbunden ist, die einen umlaufenden Gehäuserahmen (56) trägt, der den Schwenkbereich der Spiegelscheibe seitlich umgrenzt;
**dadurch gekennzeichnet, daß** Basisplatte (52), Gehäusebasis (54) und Gehäuserahmen (56) einstückig ausgebildet sind.

2. Außenspiegel nach Anspruch 1, **dadurch gekennzeichnet, daß** die Trägerplatte (52) aus Kunststoff besteht.

3. Außenspiegel nach Anspruch 1 oder 2, **dadurch gekennzeichnet, daß** im Falle einer Wabenstruktur (26) auf der Vorder- und Rückseite der Basisplatte (52) die Wabenstruktur auf der Vorderseite gegenüber der Wabenstruktur auf der Rückseite versetzt ist.

4. Außenspiegel nach einem der vorhergehenden Ansprüche, daß die Waben der Wabenstruktur in unterschiedlichen Bereichen der Trägerplatte (50) einen unterschiedlichen Durchmesser aufweisen.

5. Außenspiegel nach einem der vorhergehenden Ansprüche, daß die Wabenwände der Wabenstruktur in unterschiedlichen Bereichen der Trägerplatte unterschiedlich hoch ausgebildet sind.

6. Außenspiegel nach einem der vorhergehenden Ansprüche, **dadurch gekennzeichnet, daß** auf der Trägerplatte (50) einstückig mit der Trägerplatte (50) eine Aufnahme (14) für die Verstelleinheit ausgebildet ist, und daß die Verstelleinheit in der Aufnahme formschlüsssig angeordnet ist.

7. Außenspiegel nach Anspruch 6, **dadurch gekennzeichnet, daß** die Aufnahme (14) ein Teil des Gehäuses der Verstelleinheit ist.

8. Außenspiegel nach einem der vorhergehenden Ansprüche, **dadurch gekennzeichnet, daß** auf der Basisplatte (52) umlaufend eine Randwand ausgebildet ist, die sich in Normalenrichtung zur der Basisplatte (52) erstreckt.

9. Außenspiegel nach einem der vorhergehenden Ansprüche, **dadurch gekennzeichnet, daß** die Haltevorrichtung als Klemmvorrichtung ausgebildet ist, deren mindestens eines Klemmgegenlager für den Halter einstückig mit der Trägerplatte (50) ausgebildet ist und deren Klemmglied kraftschlüssig mit dem mindestens einen Klemmgegenlager (40) verbindbar ist, und daß das mindestens eine Klemmgegenlager durch unterschiedlich hoch ausgebildete Wabenwände der Wabenstruktur (26) geformt ist.

## Claims

1. An external mirror for motor vehicles, including
a holder for securing the mirror on the motor vehicle,
a carrier plate (50) located in a housing, on which the housing is retained, and which is secured to the holder through retainer means,
at least one mirror assembly with a mirror pane, which is pivotably mounted on the carrier plate (50) and arranged on the housing (4),
at least one adjustment unit mounted on the carrier plate (50) and connected with the at least one mirror assembly for pivoting the latter, wherein
the carrier plate (50) has a base plate (52) with front and back sides, and on the front and/or back side of the base plate (24, 52) a honeycomb structure (26) with a multiplicity of cells (28) is formed integral with the base plate (52), the cell walls of which extend in a direction normal to the base plate (52); and
the carrier plate (50) is connected to a housing base (54) carrying a peripheral housing frame (56) which laterally limits the pivoting range of the mirror pane,
**characterized in that** base plate (52), housing base (54) and housing frame (56) are designed to be of one piece.

2. An external mirror in accordance with claim 1, **characterized in that** the carrier plate (52) is comprised of plastic.

3. An external mirror in accordance with claim 1 or 2, **characterized in that** in the case of a honeycomb structure (26) on the front and back sides of the base plate (52), the honeycomb structure on the front side is offset in relation to the honeycomb structure on the back side.

4. An external mirror in accordance with any one of the preceding claims, **characterized in that** the cells of the honeycomb structure exhibit different diameters in different areas of the carrier plate (50).

5. An external mirror in accordance with any one of the preceding claims, **characterized in that** the cell walls of the honeycomb structure are designed to have different heights in different areas of the carrier plate.

6. An external mirror in accordance with any one of the preceding claims, **characterized in that** on the carrier plate (50), integral with the carrier plate (50), a reception (14) for the adjustment unit is formed, and the adjustment unit is arranged in positive engagement in the reception.

7. An external mirror in accordance with claim 6, **characterized in that** the reception (14) is part of the housing of the adjustment unit.

8. An external mirror in accordance with any one of the preceding claims, **characterized in that** peripherally on the base plate (52) a rim wall is formed which extends in a direction normal to the base plate (52).

9. An external mirror in accordance with any one of the preceding claims, **characterized in that** the retainer means is designed as a clamping device of which at least one clamping support for the holder is formed integral with the carrier plate (50), and the clamping member thereof is capable of being frictionally connected with the at least one clamping support (40), and **in that** the at least one clamping support (40) is formed by cell walls of the honeycomb structure (26) designed to have different heights.

## Revendications

1. Rétroviseur externe pour véhicules avec
un appui pour la fixation du rétroviseur sur le véhicule, une plaque support (50) agencée dans un boîtier, sur laquelle est maintenu le boîtier et qui est fixée sur l'appui au moyen d'un dispositif de retenue,
au moins une installation de rétroviseur disposée sur le boîtier (4) positionnée de façon pivotante sur la plaque support (50) avec vitre de rétroviseur,
au moins une unité de réglage qui est placée sur la plaque support (50) et qui est reliée à au moins une installation de rétroviseur pour le balayage horizontal de celle-ci, moyennant quoi
la plaque support (50) comprend une plaque de base avec une face avant et une face arrière, et sur la face avant et/ou la face arrière de la plaque de base (52) une structure en nid d'abeilles avec une multitude de nids d'abeilles configurée en une seule pièce avec la plaque de base (52), dont les parois en nids d'abeilles s'étendent dans le sens normal par rapport à la plaque de base (52) ; et
la plaque support (50) est reliée à une base de boîtier (54) qui supporte un cadre de boîtier rotatif (56) qui délimite latéralement la zone de pivotement de la vitre de rétroviseur ;
**caractérisé en ce que** la plaque de base (52), la base de boîtier (54) et le cadre de boîtier (56) sont configurés en une seule pièce.

2. Rétroviseur externe selon la revendication 1, **caractérisé en ce que** la plaque support (52) est en matière plastique.

3. Rétroviseur externe selon la revendication 1 ou 2, **caractérisé en ce que** dans le cas d'une structure en nid d'abeilles sur la face avant et la face arrière de la plaque de base (52), la structure en nid d'abeilles est décalée sur la face avant par rapport à la structure en nid d'abeilles sur la face arrière.

4. Rétroviseur externe selon l'une des revendications précédentes, **caractérisé en ce que** les nids d'abeilles de la structure en nid d'abeilles comprennent un diamètre variable dans différentes zones de la plaque support (50).

5. Rétroviseur externe selon l'une des revendications précédentes, **caractérisé en ce que** les parois en nids d'abeilles de la structure en nid d'abeilles sont configurées à différentes hauteurs dans les différentes zones de la plaque support.

6. Rétroviseur externe selon l'une des revendications précédentes, **caractérisé en ce que** sur la plaque support (50) un logement (14) pour l'unité de réglage est configuré en une seule pièce avec la plaque support (50), et **en ce que** l'unité de réglage est agencée par complémentarité de forme dans le logement.

7. Rétroviseur externe selon la revendication 6, **caractérisé en ce que** le logement (14) est une partie du boîtier de l'unité de réglage.

8. Rétroviseur externe selon l'une des revendications précédentes, **caractérisé en ce qu'**une paroi périphérique est configurée de façon rotative sur la plaque de base qui s'étend dans le sens normal par rapport à la plaque de base (52).

9. Rétroviseur externe selon l'une des revendications précédentes, **caractérisé en ce que** le dispositif de retenue est configuré comme un dispositif de serrage dont au moins une butée de serrage pour l'appui est configurée en une seule pièce avec la plaque support (50), et dont l'élément de serrage peut être relié, entraîné par adhérence, à au moins une butée de serrage (40), et **en ce que** au moins une butée de serrage est formée par des parois en nid d'abeilles configurées à différentes hauteurs de la structure en nid d'abeilles (26).
